# EUROPÄISCHE PATENTSCHRIFT

(11) **EP 1 897 824 B1**
(45) Veröffentlichungstag und Bekanntmachung des Hinweises auf die Patenterteilung: **28.10.2009**
(21) Anmeldenummer: 07112422.6
(22) Anmeldetag: 13.07.2007
(51) Int. Cl.: B65G 17/34

(54) **Stückgutförderer, insbesondere für Fluggepäck**
Piece goods conveyor, in particular for air baggage
Transporteur d'articles, en particulier pour bagages d'avions

(30) Priorität: 08.09.2006 DE 102006042179
(43) Veröffentlichungstag der Anmeldung: 12.03.2008
(73) Patentinhaber: SIEMENS AKTIENGESELLSCHAFT, 80333 München (DE)
(72) Erfinder: Kuhn, Michael, 74889 Sinsheim (DE)

(56) Entgegenhaltungen:
- DE-A1- 2 440 682
- US-A- 3 231 068
- US-A- 3 451 525
- US-B1- 6 669 001

## Beschreibung

Die Erfindung betrifft einen Stückgutförderer, insbesondere für Fluggepäck, mit einem Führungsrahmen für eine von diesem getragene, in Längsrichtung des Führungsrahmen angetriebene Trageinrichtung, die aus einer Vielzahl von miteinander zu einer Art Schienenbahn verbundenen Trägern steht, die jeweils zur Aufnahme mindestens einen Stückgutteils mit einem angetriebenen, um beidseitig am Träger gelagerte Umlenkrollen endlos geführten Querförderer versehen sind, mittels dem die auf dem Träger aufliegenden Stückgutteile motorgetrieben quer zur Transportrichtung des Stückgutförderers bewegbar sind.

Zum Transport von Stückgütern, insbesondere von Fluggepäck sind angetriebene Fahrzeugrahmen bekannt, auf denen eine Gepäckschale (Tray) mitgeführt wird. Gepäckschalen haben den Vorteil, dass in ihnen jegliche Art von Stückgut bzw. Gepäck sicher transportiert werden kann; denn häufig handelt es sich, besonders bei Fluggepäck, um biegeschlaffes Stückgut, wie Rucksäcke, Taschen, etc. die auf glatten Gurtförderern nur unter großen Problemen förderbar sind. In den Schalen hingegen kann selbst rollfähiges Gut transportiert werden. Nachteilig ist dabei, dass zum Entladen der Gepäckschalen diese von den sie tragenden Fahrzeugen getrennt werden müssen, um die gelöste Schale mit einem Kippmechanismus entleeren zu können. Dazu ist eine vergleichsweise teure und aufwendige Mechanik notwendig, die sich innerhalb der Förderanlage häufig wiederholt. Auch werden die Gepäckschalen mechanisch sehr stark beansprucht und müssen in Folge der erheblichen Abnutzung häufig gewechselt werden. Das stellt einen nicht unerheblichen Kostenfaktor innerhalb einer Fluggepäckförderanlage dar.

Zum Transport von Stückgütern ist es ebenfalls bekannt, sog. Querbandförderer einzusetzen, bei denen die bekannte starre Gepäckschale durch einen Querförderer ersetzt ist, der seinerseits auf dem als Träger dienenden Fahrzeugrahmen angeordnet ist. Der Querförderer ist endlos angetrieben, wobei der Antrieb ebenfalls auf dem Fahrzeugrahmen vorgesehen ist. Der Querförderers ist im rechten Winkel zur Transportrichtung des eigentlichen Stückgutförderers orientiert, der aus einer Vielzahl in der Art einer Schienenbahn miteinander verbundener Trägern mit jeweiligem Querförderer besteht. Auf dem zunächst stillstehenden Querförderer liegt das Stückgutteil auf und wird beim Transport der miteinander verbundenen Träger in Längsrichtung eines Führungsrahmens fortbewegt. Die Träger selbst können mit Fahrwerken versehen sein, die auf Schienenbahnen des Führungsrahmens abrollen. An der Entladestelle wird der jeweilige zu entladende Querförderer in seiner Umlaufrichtung angetrieben, wodurch das auf ihm aufliegende Stückgut seitlich vom Träger abgetragen wird.

Derartige auch als Querbandförderer oder Crossbelt Conveyor bezeichneten Förderer eignen sich sehr gut zum Sortieren von Stückgut, haben aber den Nachteil, dass der Transport rollfähiger oder auch biegeschlaffer Güter problematisch sein kann, wenn in Kurvenstrecken in Folge der wirksamen Fliehkräfte Stückgutteile seitlich vom Förderer abgeworfen werden. Ein Förderer der beschriebenen Art ist beispielsweise aus dem US-Patent 3 231 068 bekannt geworden, dort ist das Querband zwar mit stollenförmigen Erhebungen versehen, die jedoch nicht verhindern können, dass roll- und kippfähiges Gut instabil auf dem Querband aufliegt und herunterfallen kann. Ein anderer Förderer ist aus DE 24 40 682 bekannt, der den Oberbegriff des Anspruchs 1 offenbart.

Aufgabe der vorliegenden Erfindung ist es, ausgehend von einem Förderer der eingangs beschriebenen Art einerseits sicherzustellen, dass das aufliegende Stückgut, gleichgültig welche Raumform es aufweist, auch in Kurvenstrecken sicher transportiert werden kann und das im Entladebereich des Stückgutförderers eine wirksame und sichere Entladung des Stückgutes von dem Querbandes erfolgen kann.

Zur Lösung dieser Aufgabe wird der gattungsgemäße Stückgutförderer dadurch verbessert, dass der Querförderer aus einem in Umlaufrichtung flexiblen und in Längsrichtung des Stückgutförderers biegesteifen Kettenband besteht, das aus an ihren Längsseiten gelenkig miteinander verbundenen Kettengliedern in Form von Leisten oder schmalen Platten besteht gemäß Anspruch 1. Der bekannte endlose Gurt eines Querbandförderers wird also durch ein Kettenband in der Art eines Plattenförderers ersetzt, das in Folge seiner in Längsrichtung des Stückgutförderers biegesteifen Ausbildung eine sichere Auflage für jegliche Art von Stückgut gewährleistet und gleichzeitig eine flexible Umlenkung des Kettenbandes um die beidseitig des Trägers vorgesehenen Umlenkrollen ermöglicht.

Besonders günstig ist es, wenn ein derartig ausgestalteter Querförderer so um die Umlenkrollen geführt wird, dass auf der Seite des Obertrums zwischen den Umlenkrollen eine konkave Auflagefläche für eine Stückgutteil gebildet wird. So kann unter Ausnutzung des Eigengewichtes die Oberseite des Querförderers durchhängen, wodurch eine Mulde zwischen den Umlenkrollen gebildet ist, die verhindert, dass das Stückgutteil seitlich vom Förderer fällt. Dazu ist das umlaufende Kettenband spannungsfrei zwischen den Umlenkrollen geführt.

Alternativ kann nach einem anderen Merkmal der Erfindung die konkave Auflagefläche für das Stückgut auch durch beidseitige formschlüssige Führungen der äußeren Kettenbandglieder erzwungen werden. Auf diese Weise lässt sich die Auflagefläche oder Mulde von vornherein festlegen und somit eine sichere "Transportschale" aus dem Querförderband formen.

Um zu gewährleisten, dass das Stückgutteil an der Entladestelle des Stückgutförderers durch Querantrieb des Querbandes seitlich abgeworfen werden kann, ist nach einem besonders günstigen Merkmal der Erfindung vorgesehen, dass einzelne Glieder des Kettenbandes zur Bildung eines Mitnehmers im Bereich des Obertrums beim Umlauf des Kettenbandes aufstellbar sind. Bei entsprechend spannungsfrei geführtem oder durchhängendem Kettenband ist es möglich, im Bereich zwischen zwei benachbarten Gliedern des Kettenbandes eine Aufwärtsbewegung der Gelenke zu erzwingen, so dass sich die benachbarten Glieder um ihre jeweils äußeren Gelenke dachförmig nach oben bewegen. Auf diese Weise entsteht eine Erhebung auf der sonst glatten Auflagefläche des Querförderers, die als Mitnehmer beim Abtransport eines Stückgutteiles dienen kann.

Zum Aufstellen der einzelnen Glieder des Kettenbandes im Bereich des Obertrums sind Aktoren vorgesehen, die im vorgesehenen Bereich von unten auf die aufzustellenden Glieder einwirken und jeweils zwei benachbarte Glieder zur Bildung des dachförmigen Mitnehmers aufstellen. Die Aktoren laufen dabei mit dem Kettenband um und werden über feststehende, am Träger vorgesehene Widerlager dann betätigt, wenn der entsprechende Bereich des Kettenbandes über das Widerlager läuft. Ein derartig ausgebildetes Kettenband ist beispielsweise der niederländischen Patentschrift 102 10 84 zu entnehmen. Das dort beschriebenes Transportband ist in modifizierter Form für die in Rede stehenden Stückgutförderanlagen im Flughafenbereich sehr günstig anwendbar. Ein verwendbarer Mechanismus zum Aufstellen benachbarter Glieder des Kettenbandes und die dafür vorgesehenen Aktoren sind dieser Patentschrift zu entnehmen, es wird darauf verwiesen. Natürlich sind auch andere Formen von Aktoren denkbar, die den gleichen oder ähnlichen Effekt haben.

Wenn nach einem besonderen Merkmal der Erfindung jeweils zwei in einem Abstand voneinander auf dem Kettenband aufgestellte Mitnehmer eine seitliche Transportsicherung gegen herabfallende Stückgutteile bilden, kann ggf. auf die Muldung des Kettenbandes verzichtet werden. Während des Transports in Längsrichtung des Stückgutförderers sind an beiden Seiten der Auflagefläche für das Stückgut die Mitnehmer aufgestellt, wobei das Kettenband bzw. die Aktoren zu den Widerlagern entsprechend positioniert sind. Zum Entladen, d. h. bei der Querbewegung des Kettenbandes, umläuft der der Entladeseite zugeordnete Aktor die Umlenkrolle und taucht dabei aus der Transportebene des Querförderers ab. Durch den an der entgegengesetzten Seite von den entsprechenden aufgestellten Kettengliedern gebildete Mitnehmer wird das Gepäckstück, sollte es auf der Oberfläche rutschen, sicher mitgenommen und zur Entladeseite transportiert.

Zusätzlich oder alternativ können die Auflageflächen der einzelnen Glieder des Kettenbandes aus einem rutschhemmenden Material gebildet oder rutschhemmend beschichtet sein.

Ein Ausführungsbeispiel der vorliegenden Erfindung ist in der Zeichnung dargestellt und wird nachfolgend beschrieben. Es zeigt:
- Figur 1: einen Querschnitt durch den Träger eines Stückgutförderers der Erfindung in grob schematischer Darstellung mit gemuldetem Querförderer,
- Figur 2: eine andere Ausführung des Trägers mit als Transportschutz aufgestellten Mitnehmern beidseitig des zu transportierenden Stückgutes und
- Figur 3: das Funktionsprinzip eines als gleichschenkliges Dreieck ausgebildeten Aktors.

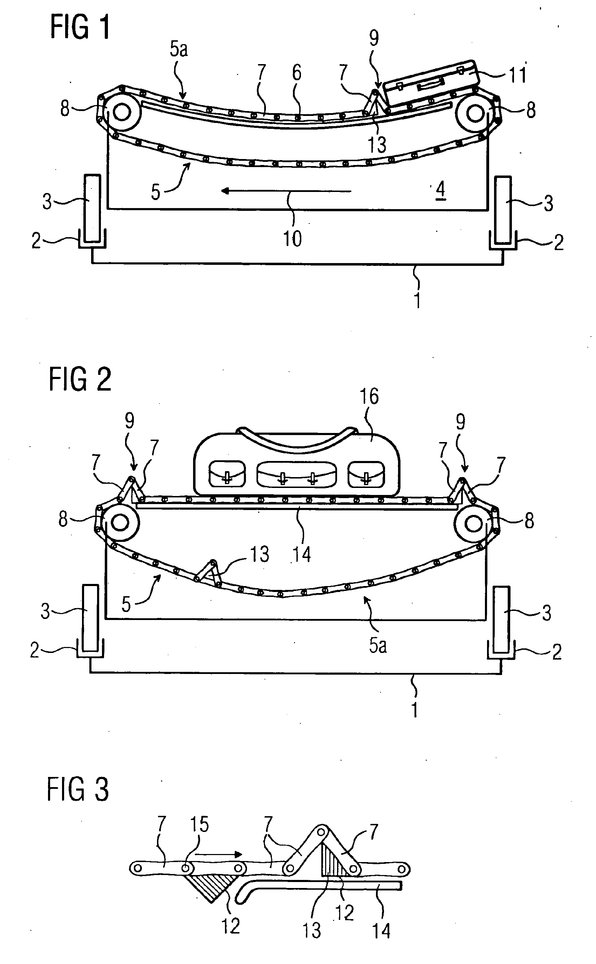

Figur 1 zeigt in grob schematischer Darstellung einen Querschnitt durch einen Träger 4 der Trageinrichtung, wobei eine Vielzahl von miteinander zu einer Art Schienenbahn verbundenen Trägern 4 den Stückgutförderer bildet. In Figur 1 ist der Führungsrahmen mit 1 bezeichnet. Er trägt die beiden Schienenstränge 2 auf denen auf Rädern 3 die Träger 4 abrollen. Die Schienenstränge sind in einer endlosen Schleife verlegt; Verzweigungen und Kreuzungen sind im Fall von Schienenbahnen möglich. Die Träger 4 sind in bekannter Weise miteinander gekoppelt und bilden entweder einen Zug oder ein in sich geschlossenes Förderersystem. Auf dem Träger 4 ist der erfindungsgemäße Querförderer angeordnet, der mit 5 bezeichnet ist. Der Querförderer 5 bildet ein in Transportrichtung der Träger 4 des Stückgutförderers (senkrecht zur Zeichnungsebene) biegesteifes Kettenband 5a, das aus bei 6 gelenkig miteinander verbundenen Kettenbandgliedern 7 besteht, wobei jedes Kettenbandglied 7 die Form einer Leiste oder schmalen länglichen Platte aufweist, deren Länge etwa der Länge des Trägers 4 entspricht.

Wie in Figur 1 erkennbar, wird das Kettenband 5a um Umlenkrollen 8 geführt, die beidseitig am Träger 4 drehbar gelagert sind. Vorzugsweise ist mindestens eine der Umlenkrollen direkt oder indirekt antreibbar (nicht dargestellt). Da das 5a quer zur Transportrichtung des Stückgutförderers flexibel ist, wird die Umlenkung um die Umlenkrollen 8 ermöglicht, wobei der Umlenkradius abhängig ist von der Breite der Leisten bzw. der schmalen Platten der Kettenbandglieder 7.

In Figur 1 ist bei 9 erkennbar, ein Mitnehmer dadurch gebildet worden, dass zwei benachbarte Kettenbandglieder 7 nach oben dachförmig aufgestellt worden sind. Der so gebildete Mitnehmer nimmt beim Umlauf des Querförderers in Pfeilrichtung 10 den hier dargestellten Koffer 11 (in der Zeichnung) nach rechts mit. Das Aufstellen der Kettenbandglieder 7 erfolgt über einen Aktor 13, der anhand der Figuren 2 und 3 noch beschrieben wird.

Wie in Figur 1 erkennbar, ist das Kettenband 5a des Querförderers 5 zwischen den Umlenkrollen 8 muldenförmig geführt, so dass eine Art Schale zur Aufnahme des Gepäckstückes entsteht, die verhindert, dass beispielsweise in Kurvenstrecken, der Koffer 11 seitlich vom Förderer geschleudert wird. Diese muldenförmige oder konkave Vertiefung kann mittels Durchhängens des Kettenbandes 5a herbeigeführt werden; es ist aber auch möglich, die Kettenbandglieder 7 stirnseitig an beiden Seiten in Führungen formschlüssig zu führen und dadurch den konkaven Verlauf herbeizuführen.

In Figur 2 ist eine Lösung dargestellt, bei der das Kettenband 5a im Wesentlichen horizontal geführt und um die Umlenkrollen 8 umgelenkt wird. Im Untertrum hängt das Kettenband 5a durch und nimmt dort die Länge auf, die benötigt wird, um einzelne ausgewählte Kettenbandglieder 7 als Mitnehmer 9 aufzustellen. Wie in Figur 2 erkennbar, liegt beim Betrieb und Transport des Stückgutförderers ein biegeschlaffes Gepäckstück (Stückgutteil 16), z.B. eine Reisetasche, auf dem Kettenband 5a eines Trägers 4 auf. Beidseitig des Gepäckstückes sind Mitnehmer 9 aufgestellt, die dadurch gebildet sind, dass im Bereich der Umlenkrollen 8 jeweils zwei benachbarte Kettenbandglieder 7 des Kettenbandes 5a dachförmig aufgestellt worden sind. Die in dieser Position bei still gesetztem Querförderer 5 fixierten Mitnehmer 9 stellen eine Barriere gegen das Herunterfallen des Gepäckstückes dar, die während des Längstransports des Stückgutförderers erhalten bleibt. Erst an der vorgesehenen Entladestelle, also dort wo sich der Querförderer 5 nach (in der Zeichnungsebene) links oder rechts bewegt, werden die Mitnehmer 9 an der Entladeseite durch Abtauchen der Aktoren 13 entfernt und der der Entladeseite entgegengesetzte aufgestellte Mitnehmer 9 veranlasst das Stückgutteils 13 den Querförderer 5 zu verlassen.

Die Aktoren 13 sind als gleichschenkliges Dreieck ausgebildet, dessen zwei Ecken mit den Gelenken eines Kettenbandgliedes 7 verbunden sind. Die Auflagefläche an der Unterseite des Obertrums des Kettenbandes 5a dient gleichzeitig als Widerlager 14 für die Aktoren 13. Sobald des Kettenband 5a mit dem, wie beschrieben, angelenkten Aktor 13 die Umlenkrolle 8 passiert hat, legt sich eine Seitenfläche 12 des Dreieckes an dem Widerlager 14 an, so dass das Dreiecke um den voreilenden Gelenkpunkt (15 in Figur 3) nach oben geschwenkt wird, wodurch das Glied 7 und das dazu benachbarte Kettenbandglied 7 des Kettenbandes 5a nach oben gedrückt werden. Dieser Vorgang ist in Figur 3 schematisch dargestellt.

Sobald beim Weitertransport des Querförderers die entsprechenden Kettenbandglieder 7 des Kettenbandes 5a des Widerlagers 14 verlassen, schwenkt das Dreieck nach unten und der zuvor gebildete Mitnehmer 9 verschwindet durch Strecken der Kettenbandglieder 7. Durch geeignete Positionierung der Aktoren 13 an dem Kettenband 5a und/oder entsprechende Positionierung des Widerlagers 14 lassen sich an beliebigen Stellen des Kettenbandes 5a Mitnehmer 9 bilden und wieder entfernen. Die Mitnehmer 9 bewirken ein sicheres Entladen des Kettenbandes 5a an der Entladestelle des Stückgutförderers auch bei schwer manipulierbarem Stückgut.

Zusätzlich oder statt der Mitnehmer 9 können die Oberseiten der Kettenbandglieder 7 mit einem rutschhemmenden Belag versehen sein oder selbst rutschhemmend ausgebildet sein.

## Patentansprüche

1. Stückgutförderer, insbesondere für Fluggepäck, mit
einem Führungsrahmen für eine von diesem getragene, in Längsrichtung des Führungsrahmens angetriebene Trageinrichtung, die aus einer Vielzahl von miteinander zu einer Art Schienenbahn verbundenen Trägern (4) besteht, die jeweils zur Aufnahme mindestens eines Stückgutteils mit einem angetriebenen, um beidseitig des Trägers gelagerte Umlenkrollen (8) endlos geführten Querförderer (5) versehen sind, mittels dem die auf dem Träger aufliegenden Stückgutteile motorgetrieben quer zur Transportrichtung des Stückgutförderers bewegbar sind,
**dadurch gekennzeichnet,**
**dass** der Querförderer (5) aus einem in seiner Umlaufrichtung (1) flexiblen und in Längsrichtung des Stückgutförderers biegesteifen Kettenband (5a) in der Art eines Plattenförderers besteht, das aus an seinen Längsseiten gelenkig (6) miteinander verbundenen Kettenbandgliedern (7) besteht, wobei jedes Kettenbandglied (7) die Form einer Leiste oder schmalen länglichen Platte aufweist, deren Länge etwa der Länge des Trägers entspricht.

2. Stückgutförderer nach Anspruch 1,
**dadurch gekennzeichnet,**
**dass** auf der Seite des Obertrums des Kettenbandes (5a) zwischen den Umlenkrollen (8) eine konkave Auflagefläche für ein Stückgutteil (11, 16) gebildet wird.

3. Stückgutförderer nach Anspruch 2,
**dadurch gekennzeichnet,**
**dass** die konkave Auflagefläche für das Stückgutteil (11, 16) durch Aushängen des spannungsfrei zwischen den Umlenkrollen (8) umlaufenden Kettenbandes (5a) gebildet ist.

4. Stückgutförderer nach Anspruch 2,
**dadurch gekennzeichnet,**
**dass** die konkave Auflagefläche für das Stückgutteil (11, 16) durch beidseitige formschlüssige Führungen der äußeren Kettenbandglieder (7) erzwungen ist.

5. Stückgutförderer nach Anspruch 1,
**dadurch gekennzeichnet,**
**dass** einzelne Kettenbandglieder (7) des Kettenbandes (5a) zur Bildung eines Mitnehmers (9) im Bereich des Obertrums beim Umlauf des Kettenbandes (5a) aufstellbar sind, wobei dass das Aufstellen der einzelner Kettenbandglieder (7) durch mit dem Kettenband (5a) umlaufende Aktoren (13) erfolgt, die in vorgesehenen Bereichen von unten auf die aufzustellenden Kettenbandglieder (7) einwirken und jeweils zwei benachbarte Kettenbandglieder (7) zur Bildung eines dachförmigen Mitnehmers (9) aufrichten.

6. Stückgutförderer nach Anspruch 5,
**dadurch gekennzeichnet, dass** jeweils zwei in einem Abstand voneinander auf dem Kettenband (5a) aufgestellte Mitnehmer (9) eine beidseitige Transportsicherung gegen herabfallende Stückgutteile (11, 16) bilden.

7. Stückgutförderer nach Anspruch 5,
**dadurch gekennzeichnet,**
**dass** die Aktoren (13) durch feststehende, am Träger (4) vorgesehene Widerlager (14) beim Umlauf des Kettenbandes (5a) betätigbar sind.

8. Stückgutförderer nach Anspruch 5,
**dadurch gekennzeichnet,**
**dass** die Auflageflächen der einzelnen Kettenbandglieder (7) des Kettenbandes (5a) aus einem rutschhemmenden Material bestehen oder rutschhemmend beschichtet sind.

## Claims

1. Article conveyor, in particular for airline baggage, having a guide frame for a load-bearing arrangement which is borne by this guide frame, is driven in the longitudinal direction of the guide frame and comprises a multiplicity of carriers (4) which are connected to one another to form a kind of rail track and, for receiving at least one article in each case, are provided with a driven transverse conveyor (5) which is guided endlessly about deflecting rollers (8), mounted on both sides of the carrier, and by means of which the articles resting on the carrier can be moved, in a motor-driven manner, transversely to the transporting direction of the article conveyor, **characterized in that** the transverse conveyor (5) comprises a chain belt (5a) which is formed in the manner of a plate conveyor, is flexible in its direction of circulation (1), is flexurally rigid in the longitudinal direction of the article conveyor and comprises chain-belt links (7) which are connected to one another in an articulated manner (6) on the longitudinal sides of the chain belt, each chain-belt link (7) being in the form of a strip or narrow elongate plate with a length corresponding approximately to the length of the carrier.

2. Article conveyor according to Claim 1, **characterized in that** a concave bearing surface for an article (11, 16) is formed, between the deflecting rollers (8), on the side of the top strand of the chain belt (5a).

3. Article conveyor according to Claim 2, **characterized in that** the concave bearing surface for the article (11, 16) is formed by sagging of the chain belt (5a) circulating without tensioning between the deflecting rollers (8).

4. Article conveyor according to Claim 2, **characterized in that** the concave bearing surface for the article (11, 16) is the inevitable result of form-fitting guides on both sides of the outer chain-belt links (7).

5. Article conveyor according to Claim 1, **characterized in that** individual links (7) of the chain belt (5a) can be set in an upright position in order to form a carry-along element (9) in the region of the top strand as the chain belt (5a) circulates the individual links (7) of the chain belt (5a) being set in an upright position by actuators (13) which circulate with the chain belt (5a), act from beneath, in envisaged regions, on the chain-belt links (7) which are to be set in an upright position, and erect in each case two adjacent chain-belt links (7) in order to form a roof-like carry-along element (9).

6. Article conveyor according to Claim 5, **characterized in that** in each case two carry-along elements (9) which are set in an upright position at a distance from one another on the chain belt (5a) form a means, on both sides, which safeguards against articles (11, 16) falling off.

7. Article conveyor according to Claim 5, **characterized in that** the actuators (13) can be actuated by fixed abutments (14), provided on the carrier (4), as the chain belt (5a) circulates.

8. Article conveyor according to Claim 5, **characterized in that** the bearing surfaces of the individual links (7) of the chain belt (5a) consist of a non-slip material or have a non-slip coating.

## Revendications

1. Convoyeur ( 1 ) de marchandises isolées, notamment pour des bagages d'avion, comprenant un bâti de guidage pour un dispositif porteur, qui est porté par ce bâti, qui est entraîné dans la direction longitudinale du bâti de guidage et qui est constitué d'une pluralité de supports ( 4 ) reliés entre eux à la manière d'une voie de chemin de fer et munis respectivement, pour la réception d'au moins une pièce de marchandises isolées, d'un convoyeur ( 5 ) transversal entraîné et guidé sans fin sur des rouleaux ( 8 ) de renvoi montés des deux côtés du support, convoyeur transversal au moyen duquel les pièces de marchandises isolées reposant sur le support peuvent être déplacées en étant entraînées par moteur transversalement à la direction de transport du convoyeur de marchandises isolées,
**caractérisé**
**en ce que** le convoyeur ( 5 ) transversal est constitué à la manière d'un convoyeur à plaques d'une bande ( 5a ) à chaîne souple dans la direction ( 1 ) dans laquelle elle tourne et rigide en flexion dans la direction longitudinale du convoyeur de marchandises isolées, bande qui est constituée de maillons ( 7 ) articulés ( 6 ) entre eux sur ses côtés longitudinaux, chaque maillon ( 7 ) ayant la forme d'une réglette ou d'une plaque oblongue étroite dont la longueur correspond à peu près à la longueur du support.

2. Convoyeur de marchandises isolées suivant la revendication 1,
**caractérisé**
**en ce que,** du côté du brin supérieur de la bande ( 5a ) à chaîne, est formée, entre les rouleaux ( 8 ) de renvoi, une surface de support concave pour une pièce ( 11, 16 ) de marchandises isolées.

3. Convoyeur de marchandises isolées suivant la revendication 2,
**caractérisé**
**en ce que** la surface de support concave pour la pièce ( 11, 16 ) de marchandises isolées est formée par suspension de la bande ( 5a ) à chaîne, tournant sans tension entre les rouleaux ( 8 ) de renvoi.

4. Convoyeur de marchandises isolées suivant la revendication 2,
**caractérisé**
**en ce que** la surface de support concave pour la pièce ( 11, 16 ) de marchandises isolées est formée par des guidages à complémentarité de forme des deux côtés des maillons ( 7 ) extérieurs de la bande.

5. Convoyeur de marchandises isolées suivant la revendication 1,
**caractérisé**
**en ce que** des maillons ( 7 ) de la bande ( 5a ) à chaîne peuvent, pour la formation d'un entraîneur ( 9 ) dans la région du brin supérieur, lorsque la bande ( 5a ) tourne, être relevés, le relèvement des divers maillons ( 7 ) s'effectuant par des actionneurs ( 13 ), qui tournent avec la bande ( 5a ), qui agissent, dans des zones prévues, par le bas sur les maillons à relever et qui dressent respectivement deux maillons ( 7 ) voisins pour la formation d'un entraîneur ( 9 ) en forme de toit.

6. Convoyeur de marchandises isolées suivant la revendication 5,
**caractérisé**
**en ce que** respectivement deux entraîneurs ( 9 ), relevés à distance l'un de l'autre sur la bande ( 5a ) à chaîne, forment une sécurité de transport des deux côtés à l'encontre de la chute de pièces ( 11, 16 ) de marchandises isolées.

7. Convoyeur de marchandises isolées suivant la revendication 5,
**caractérisé**
**en ce que** les actionneurs ( 13 ) peuvent être actionnés par des butées ( 14 ) fixes prévues sur le support ( 4 ) lorsque la bande ( 5a ) à chaîne tourne.

8. Convoyeur de marchandises isolées suivant la revendication 5,
**caractérisé**
**en ce que** les surfaces de support des divers maillons ( 7 ) de la bande ( 5a ) à chaîne sont en un matériau anti-glissement ou sont revêtues d'une manière à s'opposer au glissement.
